# DEMANDE DE BREVET EUROPEEN

(11) **EP 2 854 395 A1**
(43) Date de publication de la demande: **01.04.2015**
(21) Numéro de dépôt: 14186505.5
(22) Date de dépôt: 26.09.2014
(51) Int. Cl.: H04N 7/14

(54) **Procédé et dispositif de transmission d'au moins une partie d'un signal lors d'une session de visioconférence**

(30) Priorité: 30.09.2013 FR 1359457
(71) Demandeur: Orange, 75015 Paris (FR)
(72) Inventeur: Noisette, Yoann, 14320 MAY SUR ORNE (FR); Levis, Pierre, 14000 CAEN (FR)
(74) Mandataire: Delumeau, François Guy

(57) **Abrégé**

L'invention vise un procédé de transmission d'au moins une partie d'un signal acquis par un premier terminal vers un deuxième terminal, lors d'une session de visioconférence, ce signal comprenant un flux audio et un flux vidéo véhiculant des images acquises à l'aide d'un capteur d'images vidéo, comprenant :
- l'obtention (E20) d'un paramètre représentatif d'une qualité d'acquisition par le capteur des images vidéo véhiculées par le flux vidéo du signal ;
- une étape de notification (E55) au premier terminal d'une information représentative de ladite qualité d'acquisition ;
- si ce paramètre est représentatif d'une qualité d'acquisition supérieure à un niveau prédéterminé (E30), la transmission (E40) vers le deuxième terminal des flux audio et vidéo du signal ;
- sinon :
• la transmission (E50) vers le deuxième terminal du flux audio ; et
• le blocage (E50) du flux vidéo de sorte que celui-ci n'est pas transmis vers le deuxième terminal.

## Description

### Arrière-plan de l'invention

L'invention se rapporte au domaine général des télécommunications. Elle concerne plus précisément les services de visioconférence.

De façon connue, un service de visioconférence est un service assurant la transmission en temps réel de signaux de parole (c'est-à-dire de flux audio) et d'images vidéos (c'est-à-dire de flux vidéo) d'interlocuteurs se trouvant dans deux emplacements différents (communication point à point) ou plus (communication multipoint).

Les services de visioconférence présentent de nombreux avantages pour les entreprises et pour les particuliers. Ils offrent une alternative intéressante aux réunions en présentiel notamment en termes de coûts et de temps, en permettant de limiter les déplacements physiques des participants.

Ces services sont par ailleurs très attractifs car ils sont aisément accessibles et s'adaptent à différents contextes.

Dans un contexte professionnel, les services de visioconférences s'appuient classiquement sur l'utilisation de salles de visioconférence dédiées, spécialement équipées à cet effet (ex. conditions d'éclairage et de cadrage optimisées, utilisation d'équipements d'acquisition et de rendu des images de grande qualité, réglages des équipements, etc.), afin de contrôler et d'optimiser la qualité du service rendu ainsi que l'expérience des utilisateurs.

Ces installations dédiées et optimisées intègrent par ailleurs la possibilité de se connecter aux services de visioconférences à partir d'autres terminaux que ceux prévus initialement à cet effet, tels que des ordinateurs personnels, des tablettes ou des téléphones intelligents (aussi connus sous le nom de « smartphones ») dès lors que ceux-ci sont équipés d'une caméra et d'un microphone.

D'autres services de visioconférences n'utilisent pas d'installation dédiée, mais uniquement des terminaux non prévus initialement à cet effet et connectés entre eux, comme par exemple des terminaux mobiles.

Ces terminaux n'offrent toutefois pas le même confort ni la même qualité d'image que les équipements dédiés. Outre des capacités techniques souvent moindres par rapport aux équipements dédiés, les conditions d'utilisation de ces terminaux dans le cadre des services de visioconférence peuvent également avoir un impact négatif sur la qualité de l'image vidéo acquise et transmise aux participants (existence de contre-jour, mobilité de l'utilisateur du terminal, mauvaise position par rapport à la caméra, etc.). Il en résulte pour les participants une mauvaise expérience du service de visioconférence, et pour le service une mauvaise gestion des ressources.

Il convient de noter que les salles de visioconférence et les terminaux dédiés à cet effet peuvent aussi ne pas être réglés de manière optimale, et générer également des images de qualité dégradée au même titre que les équipements non dédiés à la visioconférence.

Pour pallier ces inconvénients, une solution consiste à opérer quelques réglages de la vidéo lors de l'installation des terminaux. Toutefois ces réglages ne restent pas nécessairement pertinents au fil des utilisations, et sont rarement modifiés en pratique.

Une autre solution consiste à utiliser des caméras et/ou des sources de lumière contrôlées par le service de visioconférence et asservies à la qualité visuelle des flux vidéo enregistrés et transmis aux participants.

Ainsi par exemple, l'article de Mingxuan Sun et al. intitulé « Active lighting for video conferencing », IEEE transactions on circuits and systems for video technology, Vol. 19, N°12, décembre 2009, propose un système permettant d'agir en temps réel sur un système d'éclairage à diode électroluminescente (ou LED pour Light-Emitting Diode en anglais). Cependant, une telle solution est relativement complexe du fait notamment des traitements mis en oeuvre. Par ailleurs, elle n'adresse que les problèmes liés aux conditions de luminosité. Il se peut donc, qu'en dépit du traitement appliqué par le système, l'image présentée aux participants de la visio-conférence soit toujours de mauvaise qualité.

De façon similaire, le document US 2012/0274724 propose une solution reposant sur une analyse de la qualité visuelle en temps réel des flux vidéo enregistrés qui sont ensuite retraités automatiquement de sorte à améliorer leur contraste, avant d'être transmis vers les autres participants. Cette solution comme la précédente reste cependant limitée, notamment par rapport aux problèmes adressés et à la complexité de sa mise en oeuvre.

Il existe donc un besoin d'une solution simple et efficace permettant d'améliorer l'expérience des utilisateurs d'un service de visioconférence.

### Objet et résumé de l'invention

La présente invention répond notamment à ce besoin en proposant un procédé de transmission d'au moins une partie d'un signal acquis par un premier terminal vers au moins un deuxième terminal lors d'une session de visioconférence, ce signal comprenant un flux audio et un flux vidéo véhiculant des images vidéo acquises à l'aide d'au moins un capteur d'images vidéo associé au premier terminal, ce procédé de transmission comprenant :
- une étape d'obtention d'un paramètre représentatif d'une qualité d'acquisition par le capteur des images vidéo véhiculées par le flux vidéo de ce signal ;
- une étape de notification au premier terminal d'au moins une information représentative de la qualité d'acquisition des images vidéo véhiculées par le flux vidéo, ladite information représentative permettant à un utilisateur dudit premier terminal d'entreprendre des actions correctives visant à améliorer la qualité d'acquisition des images vidéo par ledit capteur ;
- si ce paramètre est représentatif d'une qualité d'acquisition supérieure à un niveau de qualité prédéterminé, une étape de transmission vers ledit au moins un deuxième terminal du flux audio et du flux vidéo du signal ;
- sinon :
   - une étape de transmission vers ledit au moins un deuxième terminal du flux audio ; et
   - une étape de blocage du flux vidéo de sorte que ce flux vidéo n'est pas transmis vers ledit au moins un deuxième terminal.

L'invention propose ainsi de transmettre ou de bloquer un flux vidéo constitué d'une séquence d'images acquises par un capteur d'images vidéo lors d'une session de visioconférence en fonction de la qualité d'acquisition par le capteur de ces images, le flux audio correspondant étant quant à lui toujours transmis. Le fait que l'image d'un participant n'est pas transmise ne signifie pas que ce participant est exclu de la visioconférence : conformément à l'invention, il figure toujours parmi les participants, son flux audio étant toujours disponible pour les autres participants.

Au sens de l'invention, l'expression « qualité d'acquisition par le capteur des images véhiculées par un flux vidéo » est utilisée pour désigner indifféremment la qualité des caractéristiques physiques du flux (signal) vidéo, telles que la résolution de l'image (ex. haute définition ou non), et/ou la qualité des conditions dans lesquelles les images véhiculées par le flux vidéo ont été acquises par le capteur d'images vidéo, autrement dit la qualité « cinématographique » ou encore « photographique » des images du flux vidéo. Cette qualité cinématographique est à titre illustratif dans le domaine professionnel du cinéma et de la vidéo, de la responsabilité du directeur de la photographie (ou chef opérateur). Elle s'appuie notamment sur certaines caractéristiques importantes d'une image vidéo, à savoir par exemple la couleur, le cadrage, l'éclairage et la stabilité numérique du capteur, et qui reflètent les conditions d'acquisition de l'image par le capteur d'images vidéo considéré (ex. webcam, caméra haute définition, etc.).

Les inventeurs ont avantageusement corrélé ces caractéristiques avec le ressenti des participants à la visioconférence. Ainsi, dans un mode particulier de réalisation de l'invention, le paramètre représentatif d'une qualité d'acquisition par le capteur des images véhiculées par le flux vidéo prend en compte au moins une qualité parmi:
- une qualité de cadrage des images vidéo véhiculées par le flux vidéo et acquises par le capteur d'images vidéo (on cherche en particulier par ce biais à détecter la présence de tête(s) coupée(s) dans les images, ou de têtes ne prenant pas assez d'espace dans l'image, etc.) ;
- une qualité de stabilité du capteur d'images vidéo lors de l'acquisition des images vidéo véhiculées par le flux vidéo (l'idée étant de détecter notamment un mouvement trop important animant le capteur lors de l'acquisition des images); et
- une qualité d'éclairage lors de l'acquisition des images vidéo véhiculées par le flux vidéo (afin notamment de détecter la présence de contrejour, d'une lumière trop vive, etc.).

Bien entendu, d'autres critères peuvent être pris en compte pour déterminer si la qualité d'acquisition des images du flux vidéo est suffisante ou non, que ce soit d'ordre technique ou en variante d'ordre esthétique (harmonies des couleurs, habillement des personnes, qualité de l'arrière-plan de l'utilisateur du premier terminal en termes de couleurs et d'encombrement par exemple, etc.).

L'information représentative de la qualité d'acquisition des images vidéo véhiculées par le flux vidéo notifié au premier terminal peut par exemple prendre la forme d'indices de qualité calculés à partir des images du flux vidéo (ex. indice de qualité de cadrage, de stabilité ou encore d'éclairage), ou de messages plus didactiques tels que « qualité de cadrage insuffisante », ou encore d'instructions destinées à l'utilisateur du premier terminal pour améliorer cette qualité.

Ainsi, et de façon particulièrement avantageuse, l'utilisateur du premier terminal peut à partir de cette information entreprendre des actions correctives visant à améliorer la qualité d'acquisition du flux vidéo et par conséquent, la qualité du rendu de l'image qu'il diffuse pendant le service de visioconférence.

Dans un mode particulier de réalisation de l'invention, l'étape de notification est réalisée seulement si ledit paramètre représente une qualité d'acquisition qui n'est pas supérieure audit niveau de qualité prédéterminé.

Conformément à l'invention, l'analyse de la qualité d'acquisition des images du flux vidéo est réalisée avantageusement en temps réel par rapport à l'acquisition des images du flux vidéo.

Ainsi par exemple, l'étape d'obtention du paramètre (et corrélativement les étapes de transmission et/ou de blocage en résultant) peut être réalisée périodiquement.

En variante, l'étape d'obtention du paramètre peut être réalisée au démarrage de la session de visioconférence entre le premier terminal et ledit au moins un deuxième terminal.

Quels que soient le moment et/ou la fréquence auxquels l'analyse de la qualité d'acquisition est réalisée, l'invention permet d'agir rapidement (i.e. en temps réel) en évitant la diffusion vers les participants du service de visioconférence d'images dont la qualité d'acquisition est jugée insuffisante et pourrait être préjudiciable à l'expérience des participants et à leur perception du service de visioconférence. Une mauvaise qualité « cinématographique » ou de façon équivalente d'acquisition du signal vidéo provoque en effet pour l'utilisateur final qui reçoit les images de son interlocuteur, une mauvaise expérience du service de visioconférence. Cette mauvaise qualité « cinématographique » nuit également à la qualité de la communication entre les deux interlocuteurs.

Par ailleurs, la solution proposée par l'invention permet d'éviter dans le même temps un gaspillage des ressources nécessaires pour le transport et le traitement de ces images de qualité insuffisante.

En outre, cette solution est particulièrement simple et efficace. Elle permet d'améliorer l'expérience des participants au service de visioconférence sans requérir de retraitement coûteux des images vidéo acquises, ce qui facilite son implémentation notamment sur des terminaux légers comme des terminaux mobiles par exemple.

De plus, en décidant simplement d'occulter la transmission du flux vidéo lorsque la qualité d'acquisition des images de ce flux est insuffisante, l'invention permet de s'accommoder de différentes causes à l'origine de cette qualité insuffisante. La solution proposée par l'invention ne vise en effet pas à traiter une cause particulière mais à améliorer globalement l'expérience ressentie par les participants à la visioconférence.

Dans un mode particulier de réalisation, le procédé de transmission comprend en outre, si le paramètre n'est pas représentatif d'une qualité d'acquisition supérieure à un niveau de qualité prédéterminé, une étape de transmission d'une image prédéterminée audit au moins un deuxième terminal.

Cette image prédéterminée (i.e. fixe) peut être par exemple une image noire, une image de couleur uniforme ou encore une image sélectionnée à l'avance par l'utilisateur du premier terminal ou du deuxième terminal (ex. une image de l'utilisateur du premier terminal). Sa transmission consomme une bande passante réduite tout en améliorant l'expérience des participants à la visioconférence.

Dans un mode particulier de réalisation, le procédé de transmission comprend, suite à une étape de blocage du flux vidéo, une étape d'activation de la transmission du flux vidéo en accompagnement du flux audio si la qualité d'acquisition est supérieure au niveau de qualité prédéterminé pendant au moins une durée prédéfinie.

Autrement dit, le blocage du flux vidéo n'est pas nécessairement définitif. Le flux vidéo peut en effet être retransmis dès lors qu'une qualité d'acquisition suffisante au vu de critères prédéterminés est détectée. Un dimensionnement idoine de la durée permet de s'affranchir de phénomènes d'instabilité (mécanisme d'hystérésis).

En variante, on peut au contraire envisager que le blocage du flux vidéo soit définitif pour toute la durée de la session de visioconférence, notamment lorsque l'étape d'obtention du paramètre est réalisée au début de la session de visioconférence et uniquement à ce moment-là.

Le paramètre représentatif de la qualité d'acquisition des images vidéo véhiculées par le flux vidéo du signal acquis par le premier terminal peut être obtenu de différentes façons.

Ainsi, dans un mode particulier de réalisation ce paramètre est obtenu à partir d'au moins un indice de qualité calculé par le capteur et transmis avec le signal et/ou à partir d'informations contenues dans le flux vidéo.

Un tel indice de qualité est par exemple :
- un indice de la qualité du cadrage, visant à détecter si une partie pertinente de l'image vidéo attendue (ex. visage de l'utilisateur du premier terminal) est correctement cadré par rapport aux attentes des participants ;
- un indice de la qualité de la stabilité du capteur lors de l'acquisition des images vidéo ; et
- un indice de la qualité d'éclairage, visant notamment à détecter une insuffisance de luminosité ou de contraste ainsi que la présence d'un contre-jour.

Il est à noter que d'autres indices peuvent également être pris en compte comme un indice de qualité de la composition colorimétrique de la scène filmée.

Dans un mode particulier de réalisation, les différentes étapes du procédé de transmission sont déterminées par des instructions de programmes d'ordinateurs.

En conséquence, l'invention vise aussi un programme d'ordinateur sur un support d'informations, ce programme étant susceptible d'être mis en oeuvre dans un dispositif de transmission, dans un terminal, dans un serveur de visioconférence ou plus généralement dans un ordinateur, ce programme comportant des instructions adaptées à la mise en oeuvre des étapes d'un procédé de transmission tel que décrit ci-dessus.

Ce programme peut utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un dispositif de transmission d'au moins une partie d'un signal acquis par un premier terminal vers au moins un deuxième terminal lors d'une session de visioconférence, ce signal comprenant un flux audio et un flux vidéo véhiculant des images vidéo acquises à l'aide d'au moins un capteur d'images vidéo associé au premier terminal, le dispositif de transmission comprenant :
- un module d'obtention d'un paramètre représentatif d'une qualité d'acquisition par le capteur des images vidéo véhiculées par le flux vidéo du signal ;
- un module de notification audit premier terminal d'au moins une information représentative de la qualité d'acquisition des images vidéo véhiculées par le flux vidéo, ladite information représentative permettant à un utilisateur dudit premier terminal d'entreprendre des actions correctives visant à améliorer la qualité d'acquisition des images vidéo par ledit capteur ;
- un module de transmission vers ledit au moins un deuxième terminal du flux audio et du flux vidéo du signal, activé si ce paramètre est représentatif d'une qualité d'acquisition supérieure à un niveau de qualité prédéterminé ;
- ledit dispositif étant apte à activer, lorsque ledit paramètre (PQA) représente une qualité d'acquisition qui n'est pas supérieure audit niveau de qualité prédéterminé :
   ∘ un module de transmission vers ledit au moins un deuxième terminal du flux audio ; et
   ∘ un module de blocage du flux vidéo de sorte que le flux vidéo n'est pas transmis vers ledit au moins un deuxième terminal.

Le dispositif de transmission peut être localisé dans le réseau, au niveau d'un serveur de visioconférence central jouant les intermédiaires entre les terminaux participant au service de visioconférence. Un tel serveur est généralement utilisé dans le cas de communications multipoints pour router les flux vidéo et/ou pour générer une mosaïque vidéo présentant tout ou partie des flux vidéo acquis au niveau de chacun des utilisateurs du système de visioconférence.

Ainsi, l'invention vise également un serveur de visioconférence comprenant un dispositif de transmission selon l'invention.

Ce mode de réalisation permet d'économiser les ressources du serveur qui n'a pas à traiter (ex. décoder, etc.) les images reçues du premier terminal lorsque leur qualité d'acquisition est insuffisante, et du réseau reliant le serveur aux terminaux participant à la visioconférence.

En variante, le dispositif de transmission peut être intégré en local dans le premier terminal. Ainsi, l'invention vise également un terminal comprenant un dispositif de transmission selon l'invention.

Ce mode de réalisation est particulièrement avantageux en ce qu'il économise encore davantage les ressources puisque le flux vidéo est bloqué dès le premier terminal et n'est pas émis sur le réseau jusqu'au deuxième terminal ou le cas échéant, jusqu'au serveur de visioconférence.

Selon un autre aspect, l'invention vise également un système de visioconférence comprenant :
- un premier terminal et au moins un deuxième terminal ; et
- un dispositif de transmission selon l'invention, apte à transmettre au moins une partie d'un signal acquis par le premier terminal vers ledit au moins un deuxième terminal lors d'une session de visioconférence, ce signal comprenant un flux audio et un flux vidéo véhiculant des images vidéo acquises à l'aide d'au moins un capteur d'images vidéo associé au premier terminal.

Le système bénéficie des mêmes avantages, cités précédemment, que le procédé de transmission et le dispositif de transmission.

On peut également envisager, dans d'autres modes de réalisation, que le procédé de transmission, le dispositif de transmission et le système selon l'invention présentent en combinaison tout ou partie des caractéristiques précitées.

### Brève description des dessins

Des caractéristiques et avantages particuliers de la présente invention ressortiront de la description détaillée faite aux figures dans lesquelles :
- la figure 1 représente un système de visioconférence conforme à l'invention dans un premier mode de réalisation ;
- la figure 2 illustre un exemple d'architecture matérielle d'un dispositif de transmission selon l'invention ;
- la figure 3 représente, sous forme d'ordinogramme, les principales étapes d'un procédé de transmission conforme à l'invention dans une variante d'implémentation ;
- la figure 4 représente, sous forme d'ordinogramme, un mécanisme d'hystérésis mis en oeuvre durant le procédé de transmission pour encadrer l'activation d'une transmission du flux vidéo après un blocage de celui-ci ;
- la figure 5 illustre un exemple d'obtention d'indices de qualité permettant de déterminer un paramètre de qualité tel qu'utilisé lors des étapes du procédé de transmission représenté à la figure 3 ;
- la figure 6 représente un système de visioconférence et un serveur de visioconférence intégrant un dispositif de transmission, conformes à l'invention, dans un second mode de réalisation.

### Description détaillée de l'invention

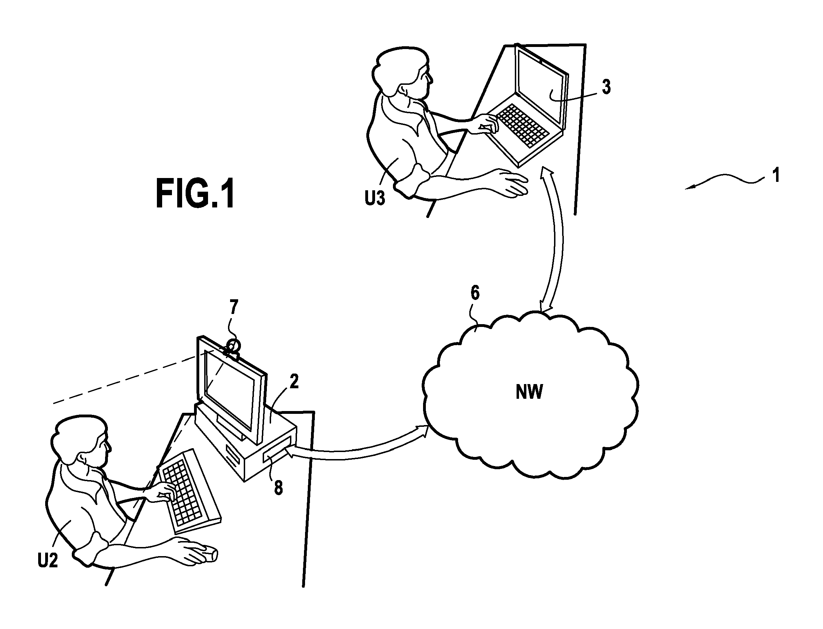

La figure 1 représente un système 1 de visioconférence conforme à l'invention dans un premier mode de réalisation.

Le système 1 de visioconférence comprend :
- une pluralité de terminaux 2 et 3 participant à une visioconférence, et communiquant entre eux via un réseau de télécommunications 6 ; et
- un dispositif de transmission 8 conforme à l'invention.

Le terminal 2 est un terminal conforme à l'invention (premier terminal au sens de l'invention). Il s'agit, dans l'exemple illustré à la figure 1, d'un ordinateur muni d'un capteur d'images vidéo 7 (une webcam ici) permettant à l'utilisateur U2 de participer à une visioconférence avec l'utilisateur U3 du terminal 3. Le terminal 3 est par exemple ici un ordinateur portable.

Plus précisément, le capteur 7 associé au terminal 2 lui permet d'acquérir une vidéo de l'utilisateur U2 destinée à être transmise vers les autres participants de la visioconférence (i.e. ici vers le terminal 3). Cette vidéo constitue un signal au sens de l'invention comprenant un flux audio et un flux vidéo.

Aucune limitation n'est attachée au nombre ni à la nature des terminaux participant à la visioconférence, ni même à la nature du réseau de télécommunications 6 reliant ces terminaux. Ainsi, les terminaux 2 et 3 peuvent être indifféremment des ordinateurs fixes ou portables, des téléphones intelligents, des tablettes numériques ou encore des équipements dédiés de visioconférence, etc., dès lors qu'ils sont équipés d'une application (programme) de visioconférence et connectés entre eux typiquement via un réseau de télécommunications. De même le réseau de télécommunications 6 peut être un réseau mobile (ex. UMTS (Universal Mobile Télécommunications System)) ou fixe (ex. Ethernet), filaire ou sans fil (ex : WLAN (Wireless Local Area Network)), privé ou public, etc.

Conformément à l'invention, avant sa transmission vers le terminal 3 (deuxième terminal au sens de l'invention), le signal vidéo acquis par le capteur 7 est traité par le dispositif de transmission 8 de sorte à bloquer la transmission du flux vidéo du signal (i.e. des images du signal seulement) lorsque la qualité d'acquisition des images vidéo par la webcam 7 est insuffisante.

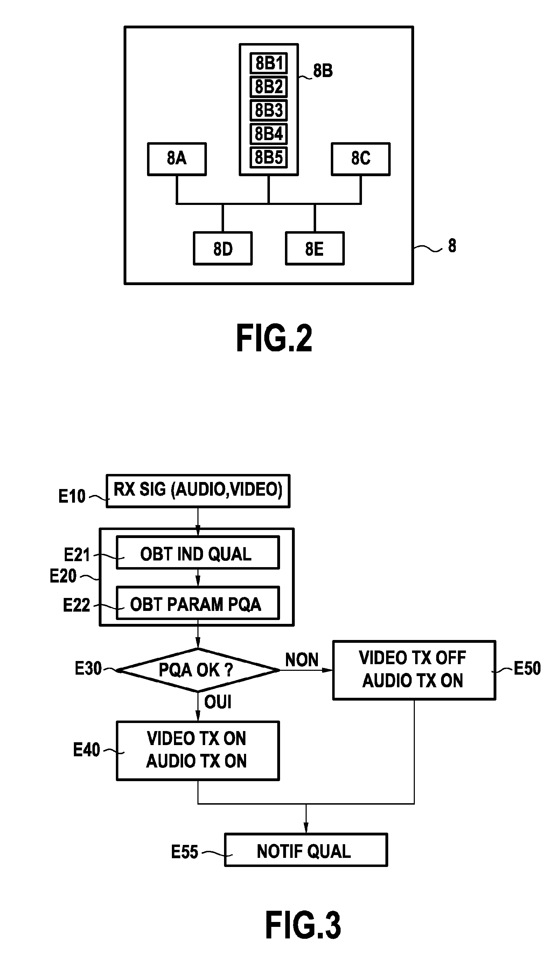

Dans le premier mode de réalisation décrit ici, le dispositif de transmission 8 est intégré dans le terminal 2. Il dispose de l'architecture matérielle d'un ordinateur, telle qu'illustrée schématiquement à la figure 2.

Ainsi, le dispositif de transmission 8 comporte notamment un processeur 8A, une mémoire morte 8B, une mémoire vive 8C, une mémoire non volatile 8D et des moyens de communication 8E sur le réseau de télécommunications 6. Le processeur 8A, les mémoires 8B-8D et les moyens de communications 8E peuvent éventuellement être partagés avec des moyens correspondants du terminal 2.

La mémoire morte 8B du dispositif de transmission constitue un support d'enregistrement lisible par le processeur 8A et sur lequel est enregistré un programme d'ordinateur conforme à l'invention, comportant des instructions pour l'exécution des étapes d'un procédé de transmission conforme à l'invention, les étapes de ce procédé de transmission étant décrites ultérieurement en référence à la figure 3, dans un mode particulier de réalisation.

Ce programme d'ordinateur définit de façon équivalente des modules fonctionnels du dispositif de transmission 8, tels que notamment un module de réception 8B1 d'un signal comprenant un flux audio et un flux vidéo, acquis par le terminal 2, un module d'obtention 8B2 d'un paramètre représentatif d'une qualité d'acquisition du flux vidéo, un module de notification 8B5 au terminal 2 d'au moins une information représentative de la qualité d'acquisition des images vidéo véhiculées par le flux vidéo, un module de transmission 8B3 d'au moins une partie du signal vers le terminal 3 et un module de blocage 8B4 du flux vidéo du signal si la qualité d'acquisition de ce flux est insuffisante. Le module de réception 8B1 et le module de transmission 8B3 utilisent notamment les moyens de communication 8E. Leurs fonctions sont décrites plus en détail en référence aux étapes du procédé de transmission illustrées à la figure 3.

Nous allons maintenant décrire, en référence à la figure 3, les principales étapes d'un procédé de transmission selon l'invention dans un mode de réalisation dans lequel il est mis en oeuvre, lors d'une session de visioconférence entre le terminal 2 et le terminal 3, par le dispositif de transmission 8 intégré dans le terminal 2.

On suppose, que lors d'une session de visioconférence établie entre le terminal 2 et le terminal 3, le terminal 2 acquiert au cours d'une étape E10, à l'aide de son capteur d'images vidéo 7, un signal SIG comprenant un flux audio et un flux vidéo.

Conformément à l'invention, le dispositif de transmission 8 intégré dans le terminal 2 analyse alors en temps réel, via notamment son module d'obtention 8B2, le signal SIG ainsi acquis et plus spécifiquement la composante vidéo (i.e. flux vidéo) de ce signal.

Ainsi, l'étape d'acquisition E10 est suivie d'une étape E20 d'obtention d'un paramètre PQA représentatif d'une qualité d'acquisition par le capteur 7 des images vidéo véhiculées par le flux vidéo du signal SIG. Cette qualité d'acquisition représente ici la qualité des conditions dans lesquelles les images véhiculées par le flux vidéo ont été acquises par le capteur 7, autrement dit la qualité « cinématographique » ou encore « photographique » des images du flux vidéo.

Dans le mode de réalisation décrit ici, l'étape E20 d'obtention du paramètre PQA reflétant cette qualité cinématographique se décompose en deux sous-étapes E21 et E22 mises en oeuvre par le module d'obtention 8B2.

La sous-étape E21 est une étape de détermination d'un ou de plusieurs indices de qualité des images du flux vidéo du signal SIG. Dans l'exemple envisagé ici, le dispositif 8 de transmission déterminent trois indices de qualité, à savoir :
- un indice IND QUAL CENTR de qualité de cadrage des images du flux vidéo ;
- un indice IND QUAL STAB de qualité de la stabilité numérique du capteur 7 utilisé pour l'acquisition des images du flux vidéo ; et
- un indice IND QUAL LUM de qualité de l'éclairage des images du flux vidéo.

Ces indices prennent la forme de nombres binaires, une valeur 0 étant représentative d'une qualité insuffisante de la caractéristique considérée, tandis qu'une valeur 1 est représentative d'une qualité suffisante de cette caractéristique.

Bien entendu, un nombre différent d'indices et/ou d'autres indices de qualité peuvent être choisis pour déterminer le paramètre PQA, comme par exemple un indice de qualité relatif à la colorimétrie des objets présents dans la scène vidéo, en combinaison ou non avec un ou plusieurs des indices précités.

Par ailleurs, ces indices de qualité peuvent prendre des valeurs réelles plutôt que binaires.

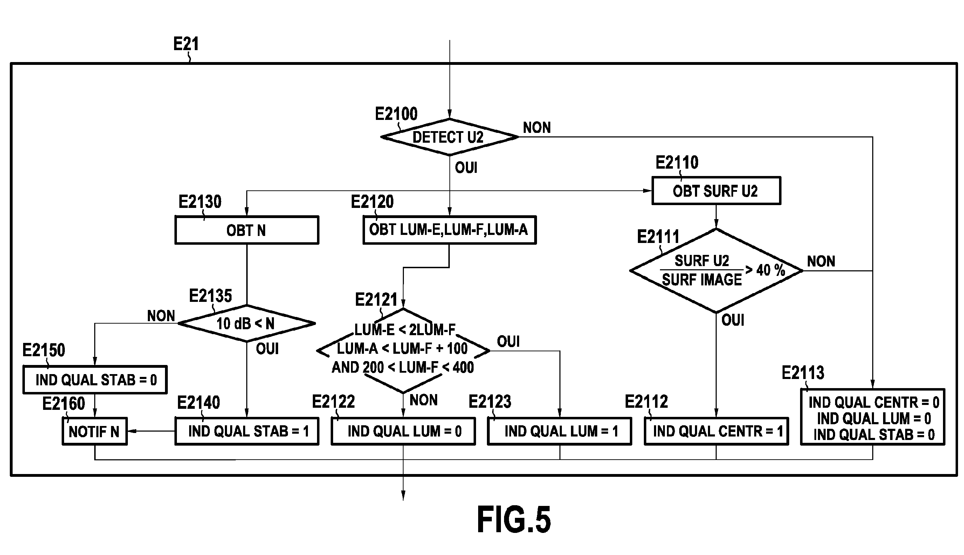

Un exemple détaillé de mise en oeuvre de l'étape E21 est illustré de façon non limitative à la figure 5, décrite ultérieurement.

Après avoir déterminé les indices de qualité IND QUAL LUM, IND QUAL STAB et IND QUAL CENTR, le dispositif 8 de transmission détermine alors, au cours de la sous-étape E22, le paramètre PQA représentatif de la qualité d'acquisition des images du flux vidéo à partir de ces indices de qualité, par exemple en appliquant une logique combinatoire prédéfinie à ces indices.

En variante, si les indices de qualité ont des valeurs réelles, le dispositif 8 de transmission peut déterminer le paramètre PQA à partir d'une combinaison pondérée des indices de qualité évalués à l'étape E21.

Ainsi, dans le mode de réalisation décrit ici, le paramètre de qualité PQA est obtenu en effectuant une opération « ET » logique entre les indices de qualité IND QUAL LUM, IND QUAL STAB et IND QUAL CENTR. Le paramètre PQA est alors égal à 1 si tous les indices de qualité considérés sont égaux à 1, et à 0 sinon.

Puis, le dispositif 8 de transmission détermine au cours d'une étape E30 si le paramètre de qualité PQA ainsi obtenu est représentatif d'un niveau de qualité suffisant ou non (autrement dit représentatif d'une qualité d'acquisition supérieure à un niveau de qualité prédéterminé).

A cet effet, il compare la valeur binaire du paramètre de qualité PQA avec la valeur 1.

Si le paramètre PQA est égal à 1, la qualité d'acquisition des images du flux vidéo est considérée comme satisfaisante (réponse oui à l'étape E30). Le cas échéant, le dispositif de transmission 8 transmet, au cours d'une étape E40, le signal SIG dans son intégralité vers le terminal 3, par l'intermédiaire de son module de transmission 8B3. Autrement dit, il transmet vers le terminal 3 le flux audio et le flux vidéo du signal SIG.

Si au contraire, le paramètre PQA est égal à 0, la qualité d'acquisition des images du flux vidéo est considérée comme insuffisante (réponse non à l'étape E30). Le cas échéant, le dispositif de transmission 8 transmet, au cours d'une étape E50, une partie seulement du signal SIG vers le terminal 3 par l'intermédiaire de son module de transmission 8B3, à savoir uniquement la composante audio (i.e. flux audio) du signal. Autrement dit, il transmet vers le terminal 3 uniquement le flux audio et bloque le flux vidéo à l'aide de son module de blocage 8B4 de sorte que la composante vidéo du signal SIG n'est pas transmise vers le terminal 3. L'utilisateur U3 du terminal 3 n'a ainsi accès durant la session de visioconférence qu'au son enregistré par l'utilisateur U2 du terminal 2 à l'aide de sa webcam 7, et n'est pas gêné par une image de qualité insuffisante.

En variante, le dispositif de transmission 8 peut, lorsqu'il détermine que la qualité d'acquisition des images véhiculées par le flux vidéo acquis par le terminal 2 n'est pas suffisante (autrement dit, lorsque le paramètre PQA n'est pas représentatif selon lui d'une qualité d'acquisition supérieure à un niveau de qualité prédéterminé), transmettre simultanément au flux audio une image prédéfinie. Cette image prédéfinie peut être une image de couleur uniforme, par exemple noire, ou une image choisie à l'avance par l'utilisateur U2 (par exemple une photo de l'utilisateur U2 ou un avatar).

Dans le mode de réalisation décrit ici, le dispositif de transmission 8 notifie par ailleurs, par l'intermédiaire de son module de notification 8B5, au cours d'une étape E55 au terminal 2 une information représentative de la qualité d'acquisition du flux vidéo. Cette information est, par exemple, le paramètre PQA déterminé à l'étape E30.

En variante, le dispositif de transmission 8 effectue l'étape E55 de notification au terminal 2 seulement si le paramètre PQA représente une qualité d'acquisition qui n'est pas supérieure au niveau de qualité prédéterminé.

Bien entendu d'autres types d'information peuvent être transmis au terminal 2, comme par exemple l'ensemble des indices de qualité calculés à l'étape E21, ou un message didactique indiquant quel(s) indice(s) sont insuffisants, ou encore des mesures de correction à exécuter.

Après réception de cette information, le terminal 2 peut de façon très avantageuse, informer l'utilisateur U2 de la qualité d'acquisition du flux vidéo afin que celui-ci envisage des mesures correctrices. Par exemple, si cette qualité d'acquisition est mauvaise, le terminal 2 peut informer l'utilisateur U2 des actions à mettre en oeuvre pour y remédier.

Ainsi, dans le cas d'un mauvais cadrage (i.e. l'indice IND QUAL CENTR est égal à zéro), le terminal 2 affiche sur son écran un message didactique préconisant des actions simples que l'utilisateur peut aisément exécuter pour lui permettre d'améliorer la qualité de cadrage.

Par exemple, le terminal 2 peut suggérer à l'utilisateur U2 de modifier l'angle de prise de vue de sa webcam de façon à ce que sa tête soit comprise entièrement dans le champ des images constitutives du flux vidéo ou encore de zoomer ou de se rapprocher de la caméra pour que son visage occupe une partie plus importante des images constitutives du flux vidéo acquisSelon un autre exemple, lors de la détection d'une mauvaise qualité de l'éclairage (i.e. l'indice IND QUAL LUM est égal à zéro) le terminal 2 recherche la présence d'un contre-jour, par exemple en analysant la luminosité dans plusieurs zones de l'image. Lorsque un contre-jour est détecté, le terminal 2 affiche sur son écran un message du type « Un fort contrejour a été détecté et votre visage est sous-exposé, nous vous suggérons de fermer un rideau et/ou d'allumer une lumière complémentaire éclairant votre visage » permettant à l'utilisateur du terminal 2 d'entreprendre les actions pertinentes permettant d'améliorer la qualité de l'éclairage.

Selon encore un autre exemple, lorsque une mauvaise qualité de stabilité numérique du capteur 7 est détectée (i.e. l'indice IND QUAL STAB est égal à zéro), le terminal 2 affiche sur son écran un message du type « votre image bouge sans cesse avec une trop grande amplitude, faite attention à rester immobile le plus possible ».

Dans le mode de réalisation décrit ici, les étapes E20 d'obtention du paramètre PQA représentatif de la qualité d'acquisition des images du flux vidéo, E30 de comparaison du ce paramètre avec un niveau de qualité prédéterminé E55 de notification, et le cas échéant E40 et E50 de transmission totale ou partielle du signal SIG vers le terminal 3, sont mises en oeuvre périodiquement, de sorte à détecter en temps réel une qualité d'acquisition des images vidéo insuffisantes et avoir une réponse adaptée conformément à l'invention.

En variante, elles peuvent être mises en oeuvre à différents instants prédéterminés.

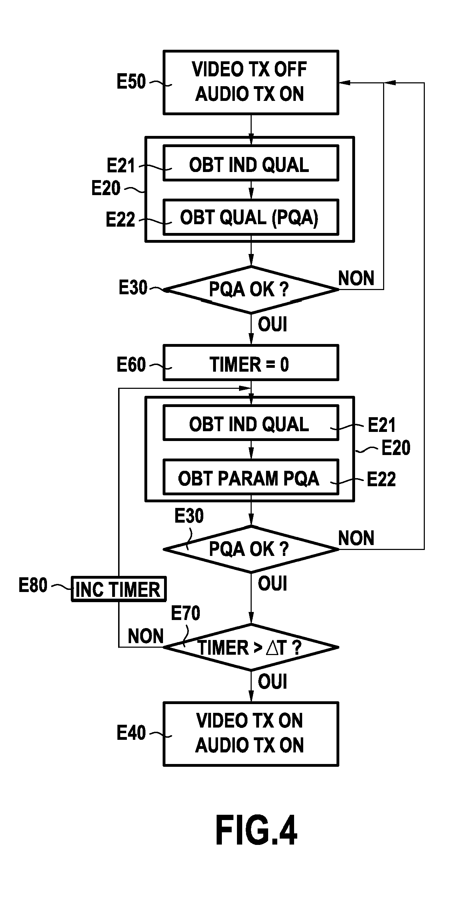

Cette mise en oeuvre périodique des étapes E20 et E30 notamment permet de réactiver la transmission du flux vidéo, via le module de transmission 8B3, après un blocage à l'étape E50, lorsque le paramètre PQA devient ou redevient représentatif d'une qualité d'acquisition des images du flux vidéo satisfaisante (i.e. supérieure à un niveau de qualité prédéterminé, à savoir égal à la valeur 1 dans l'exemple envisagé précédemment). Dans le mode de réalisation décrit ici, cette (ré)activation de la transmission du flux vidéo est accompagnée d'un mécanisme d'hystérésis, comme illustré schématiquement à la **figure 4****,** décrite maintenant.

Ainsi, l'étape E50 de blocage du flux vidéo est suivie d'une nouvelle étape E20 d'obtention du paramètre (PQA) représentatif d'une qualité d'acquisition des images du flux vidéo acquis à l'instant courant par le terminal 2, et de détermination E30 par le dispositif 8 de transmission si ce paramètre PQA est représentatif d'un niveau de qualité satisfaisant.

Si la qualité d'acquisition des images vidéo est insuffisante (réponse non à l'étape E30), le dispositif de transmission 8 maintient le blocage du flux vidéo et la transmission du flux audio (étape E50).

Sinon, il initialise un temporisateur TIMER à zéro au cours d'une étape E60.

Les étapes E20, E30 et E80 sont réitérées tant que le paramètre PQA est représentatif d'un niveau de qualité satisfaisant et que le temporisateur TIMER n'a pas atteint une durée prédéfinie ΔT, testée au cours d'une étape E70.

Si, à l'étape E70, le dispositif de transmission 8 détecte que la valeur du temporisateur TIMER est supérieure à la durée prédéfinie ΔT, il active la transmission totale du signal SIG vers le terminal 3 (c'est-à-dire de la composante audio et vidéo de ce signal, telles qu'acquises par le terminal 2). Sinon, le temporisateur est incrémenté.

Dans un autre mode de réalisation, les étapes E20-E50 peuvent être réalisées une seule fois, au démarrage de la session de visioconférence à laquelle participent les utilisateurs U2 et U3 des terminaux 2 et 3. Dans ce mode de réalisation, la décision de transmettre le signal SIG dans son intégralité ou seulement en partie vers le terminal 3 est par conséquent définitive.

Nous allons maintenant décrire, en référence à la **figure 5****,** un exemple détaillé de mise en oeuvre de l'étape E21 consistant à déterminer les indices de qualité IND QUAL STAB, IND QUAL LUM et IND QUAL CENTR. Cet exemple est donné uniquement à titre illustratif et n'est pas limitatif en soi.

Dans le mode de réalisation décrit ici, les indices IND QUAL STAB, IND QUAL LUM et IND QUAL CENTR sont évalués à partir du flux vidéo du signal SIG par le dispositif de transmission 8.

Il convient de noter que tout ou partie des indices de qualité précités peuvent être évalués soit au niveau du capteur 7, soit au niveau du dispositif de transmission 8. Lorsque les indices de qualité sont évalués au niveau du capteur 7, ils peuvent être transmis au dispositif de transmission 8 simultanément avec le flux vidéo, comme par exemple sous la forme de métadonnées associées au flux. De telles méthodes de transmission de métadonnées sont bien connues de l'homme du métier et ne sont pas décrites ici.

Dans l'exemple illustré à la figure 4, l'indice IND QUAL CENTR de qualité du cadrage est évalué de façon binaire en détectant, au cours d'une étape E2100, dans la séquence d'images animées véhiculées par le flux vidéo la présence ou l'absence d'un visage. Les algorithmes de détection de visages (ou autre forme caractéristique) dans une vidéo sont connus de l'homme du métier et ne sont donc pas décrits plus en détail ici.

Si aucun visage n'est détecté (réponse non à l'étape E2100), le dispositif de transmission 8 affecte la valeur 0 à l'indice IND QUAL CENTR au cours d'une étape E2113, cette valeur correspondant à une qualité de cadrage non satisfaisante. Il affecte également ici la valeur 0 à l'indice IND QUAL LUM de qualité d'éclairage.

Au contraire, si un ou plusieurs visages sont détectés (réponse oui à l'étape E2100), le dispositif de transmission 8 calcule alors la surface occupée par le ou les visages (par exemple en nombre de pixels), au cours d'une étape E2110.

Le rapport de la surface occupée par le ou les visages sur la surface totale de l'image est ensuite comparé à un seuil prédéterminé, par exemple 40%, au cours d'une étape E2111.

Si ce rapport est supérieur au seuil (réponse oui à l'étape E2111), la valeur 1 associée à une qualité de cadrage satisfaisante est affectée à l'indice IND QUAL CENTR de qualité du cadrage au cours d'une étape E2112.

Sinon, la valeur 0 est affectée par le dispositif de transmission 8 à cet indice au cours d'une étape E2113. Au cours de cette étape E2113, la valeur 0 est également affectée ici aux indices IND QUAL LUM et IND QUAL STAB.

L'indice IND QUAL STAB de qualité de la stabilité du capteur 7 est évalué par le dispositif de transmission 8 à partir du signal SIG. Plus précisément, on suppose ici que le dispositif de transmission 8 est muni d'un dispositif de stabilisation numérique : la stabilisation numérique consiste, de façon connue en soi, à augmenter la sensibilité du capteur afin d'avoir un temps de pose plus petit lorsqu'un mouvement du capteur est détecté. Un tel procédé s'accompagne de l'apparition d'un bruit numérique quantifiable, de façon connue de l'homme du métier.

Dans l'exemple illustré à la figure 4, lorsqu'un visage est détecté (réponse oui à l'étape E2100), le dispositif de transmission 8 évalue les mouvements de ce visage par comparaison entre des images successives du flux vidéo du signal SIG et détermine ensuite un niveau de bruit numérique N (étape E2130).

Puis, au cours d'une étape E2135, le dispositif de transmission 8 vérifie que le niveau de bruit numérique N est supérieur à un niveau prédéterminé, par exemple 10 dB. Si c'est le cas, la qualité de stabilité du capteur 7 est considérée par le dispositif de transmission 8 comme correcte, de sorte que celui-ci affecte à l'indice IND QUAL STAB la valeur 1 (étape E2140).

Dans le cas contraire, la valeur 0, représentative d'une qualité de stabilité insuffisante, est affectée à l'indice IND QUAL STAB de qualité de la stabilité numérique du capteur 7 (étape E2150).

Dans le mode de réalisation décrit ici, le dispositif de transmission 8 notifie par ailleurs au cours d'une étape E2160 au terminal 2 le niveau de bruit numérique N évalué précédemment. Sur réception de cette notification, le terminal 2 peut agir sur la sensibilité du capteur 7 de façon à ramener si nécessaire le niveau de bruit numérique N au-dessus du niveau prédéterminé. Autrement dit, le dispositif de transmission 8 régule via une boucle fermée la stabilité numérique du capteur 7 de sorte à contraindre le niveau de bruit numérique engendré par le capteur 7 à être supérieur à un niveau prédéterminé.

Comme mentionné précédemment, le dispositif 8 de transmission détermine également au cours de l'étape E21 un indice IND QUAL LUM de qualité de l'éclairage. Cet indice est déterminé ici via la mise en oeuvre d'une analyse multizone de la luminosité des images du flux vidéo du signal SIG.

De telles méthodes d'analyse sont connues de l'homme du métier : elles sont notamment utilisées par de très nombreux appareils photos numériques disponibles dans le commerce.

Dans l'exemple décrit ici, on suppose que le dispositif de transmission 8 détermine, à l'aide d'une telle méthode d'analyse lors de l'étape E2120, trois paramètres de luminosité LUM-F, LUM-E, LUM-A, caractérisant la luminosité de l'image au niveau de trois zones à savoir :
- la luminosité du visage détecté au cours de l'étape E2100 ;
- la luminosité au niveau des épaules ; et
- la luminosité du reste de l'image (ou luminosité ambiante).

La zone des épaules, au niveau de laquelle est évalué le paramètre de luminosité LUM-E, est définie, dans cet exemple, de façon relative par rapport à la zone du visage précédemment identifiée.

La zone du visage précédemment identifiée est assimilée à une ellipse. Les deux axes principaux de l'ellipse définissent un repère cartésien. Les axes de ce repère cartésien étant orientés respectivement vers le haut et vers la droite des images constituant le flux vidéo. L'intersection des deux axes de l'ellipse avec l'ellipse elle-même, définit quatre points de coordonnées respectives (-X,0), (X,0), (0,-Y) et (0,Y).

Dans le repère ainsi définit, la zone des épaules est définie par les deux rectangles R1 et R2. R1 (respectivement R2) est définit par les sommets (+X ; -Y), (+X ;-Y*1,1), (+X*1,25 ; -Y) et (+X*1,25 ; -Y*1,1) (respectivement (-X ; -Y), (-X ;-Y*1,1), (-X*1,25 ; -Y) et (-X*1,25 ; -Y*1,1)).Puis, au cours d'une étape E2121, le dispositif de transmission 8 vérifie les trois conditions suivantes afin d'affecter une valeur à l'indice IND QUAL LUM de qualité de l'éclairage, par exemple ici :
(1) si la luminosité faciale LUM-F a une valeur comprise entre 200 et 400 lux ;
(2) si la luminosité au niveau des épaules LUM-E n'excède pas deux fois la valeur de la luminosité faciale LUM-F ; et
(3) si la luminosité ambiante LUM-A ne diffère pas de plus de 100 lux par rapport à la luminosité faciale LUM-F.

Si ces trois conditions sont vérifiées (réponse oui à l'étape E2121), le dispositif 8 de transmission attribue une valeur 1 à l'indice IND QUAL LUM de qualité de l'éclairage au cours d'une étape E2123. Cette valeur 1 reflète une qualité de l'éclairage satisfaisante.

Dans le cas contraire (réponse non à l'étape E2121), l'indice IND QUAL LUM de qualité de l'éclairage est affecté à une valeur 0 au cours d'une étape E2122, reflétant une qualité d'éclairage insuffisante.

Il convient de noter que les valeurs numériques données aux étapes E2111, E2121 et E2135 sont fournies à titre indicatif et ne sont pas limitatives en soi.

En variante, d'autres méthodes d'évaluation (incluant les méthodes d'analyse conduisant à l'indice et les seuils appliqués pour affecter les valeurs 0 ou 1) d'un indice de qualité du cadrage, d'un indice de qualité de la stabilité du capteur et/ou d'un indice de qualité de l'éclairage peuvent être utilisées.

Dans le premier mode de réalisation précédemment décrit, le dispositif de transmission 8 est intégré dans le terminal 2. Dans un second mode de réalisation, le dispositif de transmission est intégré non plus au niveau du terminal mais dans un serveur de visioconférence d'un système 1' de visioconférence conforme à l'invention.

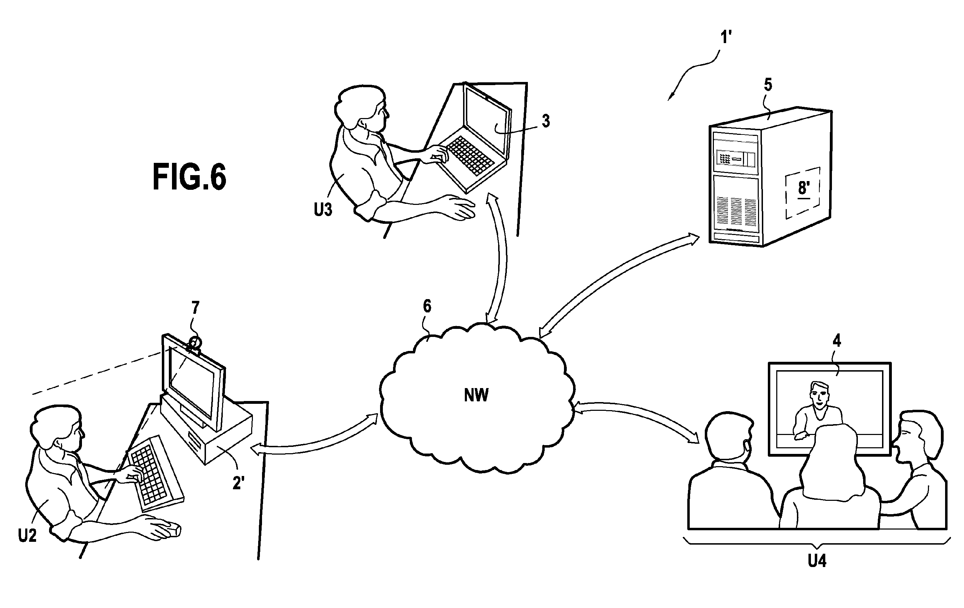

La **figure 6** illustre ce second mode de réalisation. Par souci de simplification, des références identiques sont données sur cette figure aux éléments communs avec le premier mode de réalisation et illustrés à la figure 1.

Le système 1' de visioconférence comprend :
- une pluralité de terminaux 2', 3, 4 participant à une visioconférence, et communiquant entre eux via un réseau de télécommunications 6 ; et
- un dispositif de transmission 8' conforme à l'invention.

Le terminal 2' est un terminal conforme à l'invention tel un ordinateur fixe, muni d'un capteur d'images vidéo 7 (une webcam ici) permettant à l'utilisateur U2 de participer à une visioconférence avec l'utilisateur U3 du terminal 3 et les utilisateurs U4 du terminal 4. Le terminal 3 est par exemple ici un ordinateur portable et le terminal 4, un équipement de visioconférence dédié, installé dans une salle de visioconférence et dans laquelle les conditions d'illumination et de cadrage sont contrôlées.

Dans ce second mode de réalisation, le service de visio-conférence entre les utilisateurs U2, U3 et U4 est encadré par un serveur de visio-conférence 5 connecté au réseau de télécommunications 6 et embarquant le dispositif de transmission 8'. Ainsi, le dispositif de transmission 8' se distingue du dispositif de transmission 8 illustré à la figure 1 en ce qu'il se trouve maintenant embarqué dans le serveur de visio-conférence 5 plutôt que dans le terminal 2'.

Ainsi, conformément à ce second mode de réalisation de l'invention, le signal SIG acquis par le terminal 2' est transmis au serveur de visioconférence 5, et plus particulièrement au dispositif de transmission 8' embarqué dans ce serveur. Le dispositif de transmission 8' procède comme décrit précédemment en référence aux figures 1 à 5, pour traiter le signal SIG et bloquer la transmission du flux vidéo du signal (i.e. des images du signal seulement) vers les terminaux 3 et 4 lorsque la qualité d'acquisition des images vidéo par la webcam 7 est insuffisante.

## Revendications

1. Procédé de transmission d'au moins une partie d'un signal (SIG) acquis par un premier terminal (2,2'), vers au moins un deuxième terminal (3,4), lors d'une session de visioconférence, ledit signal comprenant un flux audio et un flux vidéo véhiculant des images vidéo acquises à l'aide d'au moins un capteur (7) d'images vidéo associé au premier terminal, ledit procédé de transmission comprenant :
- une étape d'obtention (E20) d'un paramètre (PQA) représentatif d'une qualité d'acquisition par le capteur des images vidéo véhiculées par le flux vidéo du signal ;
- une étape de notification (E55) au premier terminal d'au moins une information représentative de la qualité d'acquisition des images vidéo véhiculées par le flux vidéo, ladite information représentative permettant à un utilisateur dudit premier terminal d'entreprendre des actions correctives visant à améliorer la qualité d'acquisition des images vidéo par ledit capteur.
- si ce paramètre est représentatif d'une qualité d'acquisition supérieure à un niveau de qualité prédéterminé (E30), une étape de transmission (E40) vers ledit au moins un deuxième terminal du flux audio et du flux vidéo du signal ;
- sinon :
• une étape de transmission (E50) vers ledit au moins un deuxième terminal du flux audio ; et
• une étape de blocage (E50) du flux vidéo de sorte que ce flux vidéo n'est pas transmis vers ledit au moins un deuxième terminal.

2. Procédé selon la revendication 1, dans lequel ladite étape de notification (E55) est réalisée seulement si ledit paramètre (PQA) est représentatif d'une qualité d'acquisition qui n'est pas supérieure audit niveau de qualité prédéterminé.

3. Procédé selon la revendication 1 ou 2, comportant en outre, si le paramètre (PQA) n'est pas représentatif d'une qualité d'acquisition supérieure à un niveau de qualité prédéterminé, une étape de transmission (E50) d'une image prédéterminée audit au moins un deuxième terminal.

4. Procédé selon l'une quelconque des revendications 1 à 3 dans lequel l'étape d'obtention (E20) du paramètre (PQA) est réalisée périodiquement.

5. Procédé selon l'une quelconque des revendications 1 à 3 dans lequel l'étape d'obtention du paramètre (PQA) est réalisée au démarrage de la session de visioconférence.

6. Procédé selon l'une quelconque des revendications 1 à 5 comprenant, suite à une étape de blocage (E50) du flux vidéo, une étape d'activation (E40) de la transmission du flux vidéo en accompagnement du flux audio si la qualité d'acquisition est supérieure au niveau de qualité prédéterminé pendant au moins une durée prédéfinie.

7. Procédé selon l'une quelconque des revendications 1 à 6 dans lequel le paramètre (PQA) prend en compte au moins une qualité parmi :
- une qualité de cadrage des images vidéo véhiculées par le flux vidéo et acquises par le capteur d'images vidéo ;
- une qualité de stabilité du capteur d'images vidéo lors de l'acquisition des images vidéo véhiculées par le flux vidéo ;
- une qualité d'éclairage lors de l'acquisition des images vidéo véhiculées par le flux vidéo.

8. Programme d'ordinateur comportant des instructions pour l'exécution des étapes du procédé de transmission selon l'une quelconque des revendications 1 à 7 lorsque ledit programme est exécuté par ordinateur.

9. Support d'enregistrement lisible par un ordinateur sur lequel est enregistré un programme d'ordinateur comprenant des instructions pour l'exécution des étapes du procédé de transmission selon l'une quelconque des revendications 1 à 7.

10. Dispositif (8,8') de transmission d'au moins une partie d'un signal (SIG) acquis par un premier terminal (2,2') vers au moins un deuxième terminal (3,4) lors d'une session de visioconférence, ce signal comprenant un flux audio et un flux vidéo véhiculant des images vidéo acquises à l'aide d'au moins un capteur d'images vidéo associé au premier terminal, le dispositif de transmission comprenant :
- un module d'obtention (8B2) d'un paramètre (PQA) représentatif d'une qualité d'acquisition par le capteur des images vidéo véhiculées par le flux vidéo du signal ;
- un module de notification (8B5) audit premier terminal d'au moins une information représentative de la qualité d'acquisition des images vidéo véhiculées par le flux vidéo, ladite information représentative permettant à un utilisateur dudit premier terminal d'entreprendre des actions correctives visant à améliorer la qualité d'acquisition des images vidéo par ledit capteur ;
- un module de transmission (8B3) vers ledit au moins un deuxième terminal du flux audio et du flux vidéo du signal, activé si ce paramètre (PQA) est représentatif d'une qualité d'acquisition supérieure à un niveau de qualité prédéterminé ;
- ledit dispositif étant apte à activer, lorsque ledit paramètre (PQA) représente une qualité d'acquisition qui n'est pas supérieure audit niveau de qualité prédéterminé :
o un module de transmission (8B3) vers ledit au moins un deuxième terminal du flux audio ; et
o un module de blocage (8B4) du flux vidéo de sorte que le flux vidéo n'est pas transmis vers ledit au moins un deuxième terminal.

11. Terminal (2) comprenant un dispositif de transmission (8) selon la revendication 10.

12. Serveur de visioconférence (5) comprenant un dispositif de transmission (8') selon la revendication 10.

13. Système de visioconférence (1,1') comprenant :
- un premier terminal (2,2') et au moins un deuxième terminal (3,4) ; et
- un dispositif de transmission (8,8') selon la revendication 10, apte à transmettre au moins une partie d'un signal acquis par le premier terminal vers ledit au moins un deuxième terminal lors d'une session de visioconférence, ce signal comprenant un flux audio et un flux vidéo véhiculant des images vidéo acquises à l'aide d'au moins un capteur d'images vidéo associé au premier terminal.
